# EUROPÄISCHE PATENTSCHRIFT

(11) **EP 1 812 853 B1**
(45) Veröffentlichungstag und Bekanntmachung des Hinweises auf die Patenterteilung: **05.11.2008**
(21) Anmeldenummer: 05803095.8
(22) Anmeldetag: 19.10.2005
(51) Int. Cl.: G06F 11/14

(54) **VERFAHREN, BETRIEBSSYSTEM UND RECHENGERÄT ZUM ABARBEITEN EINES COMPUTERPROGRAMMS**
METHOD, OPERATING SYSTEM AND COMPUTING ELEMENT FOR RUNNING A COMPUTER PROGRAM
PROCEDE, SYSTÈME D'EXPLOITATION ET ORDINATEUR POUR L'EXECUTION D'UN PROGRAMME INFORMATIQUE

(30) Priorität: 25.10.2004 DE 102004051967
(43) Veröffentlichungstag der Anmeldung: 01.08.2007
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); HARTER, Werner, 75428 Illingen (DE); ANGERBAUER, Ralf, 71701 Schwieberdingen (DE); KOTTKE, Thomas, 71139 Ehningen (DE); COLLANI, Yorck, 71717 Beilstein (DE); GMEHLICH, Rainer, 71254 Ditzingen (DE)
(86) Internationale Anmeldenummer: PCT/EP2005/055390
(87) Internationale Veröffentlichungsnummer: WO 2006/045733

(56) Entgegenhaltungen:
- WO-A-20/06015945
- HONG Y S ET AL: "A fault tolerant technique for scheduling periodic tasks in real-time systems" SOFTWARE TECHNOLOGIES FOR FUTURE EMBEDDED AND UBIQUITOUS SYSTEMS, 2004. PROCEEDINGS. SECOND IEEE WORKSHOP ON VIENNA, AUSTRIA 11-12 MAY 2004, PISCATAWAY, NJ, USA,IEEE, 11. Mai 2004 (2004-05-11), Seiten 135-138, XP010707048 ISBN: 0-7695-2123-1
- RAMOS-THUEL S ET AL: "The transient server approach to scheduling time-critical recovery operations" PROCEEDINGS OF THE REAL TIME SYSTEMS SYMPOSIUM. SAN ANTONIO, DEC. 4 - 6, 1991, LOS ALAMITOS, IEEE. COMP. SOC. PRESS, US, Bd. SYMP. 12, 4. Dezember 1991 (1991-12-04), Seiten 286-295, XP010026216 ISBN: 0-8186-2450-7
- LIU J W S ET AL: "IMPRECISE COMPUTATIONS" PROCEEDINGS OF THE IEEE, IEEE. NEW YORK, US, Bd. 82, Nr. 1, Januar 1994 (1994-01), Seiten 83-93, XP000435883 ISSN: 0018-9219
- HUANG Y ET AL: "COMPONENTS FOR SOFTWARE FAULT TOLERANCE AND REJUVENATION" BELL LABS TECHNICAL JOURNAL, WILEY, CA, US, Bd. 75, Nr. 2, April 1996 (1996-04), Seiten 29-37, XP000584937 ISSN: 1089-7089
- GHOSH S ET AL: "FAULT-TOLERANT RATE-MONOTONIC SCHEDULING" REAL TIME SYSTEMS, KLUWER ACADEMIC PUBLISHERS, DORDRECHT, NL, Bd. 15, Nr. 2, September 1998 (1998-09), Seiten 149-181, XP000790355 ISSN: 0922-6443

## Beschreibung

### Stand der Technik

Die vorliegende Erfindung betrifft ein Verfahren zum Abarbeiten eines Computerprogramms auf einem Rechengerät, insbesondere auf einem Mikroprozessor. Das Computerprogramm umfasst mehrere Programmobjekte. Bei dem Verfahren werden während der Abarbeitung des Computerprogramms auf dem Rechengerät Fehler detektiert.

Die Erfindung betrifft außerdem ein Betriebssystem, das auf einem Rechengerät, insbesondere auf einem Mikroprozessor, ablauffähig ist.

Schließlich betrifft die vorliegende Erfindung auch ein Rechengerät zum Abarbeiten eines Computerprogramms, das mehrere Programmobjekte umfasst. Das Rechengerät weist einen Fehlerentdeckungsmechanismus zur Detektion eines Fehlers während der Abarbeitung des Computerprogamms auf dem Rechengerät auf.

Bei der Abarbeitung eines Computerprogamms auf einem Rechengerät kann es zu sogenannten transienten Fehlern kommen. Da die Strukturen auf den Halbleiterbausteinen (sog. Chips) immer kleiner, die Taktrate der Signale aber immer größer und die Spannungen der Signale immer niedriger werden, treten transiente Fehler immer häufiger auf. Transiente Fehler treten im Gegensatz zu permanenten Fehlern nur temporär auf und verschwinden nach einiger Zeit in der Regel von selbst wieder. Bei transienten Fehlern sind lediglich einzelne Bits falsch, ohne dass das Rechengerät an sich permanent beschädigt ist. Transiente Fehler können verschiedene Ursachen haben, wie beispielsweise elektromagnetische Einflüsse, Alpha-Partikel oder Neutronen.

Bei Kommunikationssystemen liegt schon heute der Schwerpunkt bei der Fehlerbehandlung auf transienten Fehlern. Bei Kommunikationssystemen (z.B. bei dem Controller Area Network, CAN) ist es bekannt, bei der Detektion eines Fehlers die fehlerhaft übermittelten Daten erneut zu senden. Außerdem ist es bekannt, in Kommunikationssystemen einen Fehlerzähler einzusetzen, der bei Detektion eines Fehlers erhöht wird, bei korrektem Senden erniedrigt wird, und ein Senden von Daten verhindert, sobald er einen bestimmten Wert überschreitet.

Bei Rechengeräten zur Abarbeitung von Computerprogrammen erfolgt eine Fehlerbehandlung jedoch im Wesentlichen nur für permanente Fehler. Eine Berücksichtigung transienter Fehler beschränkt sich auf das Inkrementieren und gegebenenfalls Dekrementieren eines Fehlerzählers. Dieser wird in einem Speicher abgelegt und kann off-line, das heißt beispielsweise bei einem als Kraflfahrzeugsteuergerät ausgebildeten Rechengerät während eines Werkstattaufenthalts, als Diagnose- oder Fehlerinformation ausgelesen werden. Erst dann kann auf den Fehler entsprechend reagiert werden.

Die Fehlerbehandlung mittels Fehlerzähler erlaubt also zum einen keine Fehlerbehandlung innerhalb einer insbesondere für sicherheitsrelevante Systeme erforderlichen kurzen Fehlertoleranzzeit und zum anderen auch keine konstruktive Fehlerbehandlung in dem Sinne, dass innerhalb der Fehlertoleranzzeit das Computerprogamm wieder ordnungsgemäß abgearbeitet wird. Statt dessen wird beim Stand der Technik das Computerprogramm nach dem Überschreiten eines bestimmten Wertes des Fehlerzählers in einen Notlaufbetrieb umgeschaltet. Das bedeutet, dass statt des fehlerbehafteten Teils des Computerprogramms ein anderes abgearbeitet wird und die auf diese Weise ermittelten Ersatzwerte für die weitere Berechnung herangezogen werden. Die Ersatzwerte können beispielsweise anhand anderer Größen modelliert werden. Alternativ können die mit dem fehlerbehafteten Teil des Computerprogramms berechneten Ergebnisse als fehlerhaft verworfen und durch für den Notlaufbetrieb vorgesehene Standardwerte für die weitere Berechnung ersetzt werden. Die bekannten Verfahren zur Behandlung eines transienten Fehlers eines auf einem Rechengerät ablaufenden Computerprogamms erlauben somit keinen systematischen, konstruktiven Umgang mit der transienten Natur der meisten Fehler.

Aus dem Stand der Technik ist es außerdem bekannt, bei der Abarbeitung eines Computerprogramms auf einem Rechengerät auftretende transiente Fehler durch einen kompletten Neustart des Rechengeräts zu beheben. Auch diese Lösung kann nicht wirklich befriedigen, da in dem bisherigen Verlauf der Abarbeitung des Computerprogramms gewonnene Größen verloren gehen und das Rechengerät für die Dauer des Neustarts seine bestimmungsgemäße Funktion nicht erfüllen kann. Dies ist insbesondere bei sicherheitsrelevanten Systemen inakzeptabel.

Schließlich ist es als Fehlerbehandlung für transiente Fehler eines auf einem Rechengerät abgearbeiteten Computerprogramms auch bekannt, das Computerprogramm um einige Takte zurückzusetzen und einzelne Maschinenbefehle des Computerprogramms zu wiederholen. Dieses Verfahren wird auch als Micro Roll-Back bezeichnet. Bei dem bekannten Verfahren wird nur um Objekte auf Maschinenebene (Takte, Maschinenbefehle) zurückgesprungen. Das erfordert eine entsprechende Hardwareunterstützung auf Maschinenebene, was mit einem erheblichen Aufwand im Bereich des Rechengeräts verbunden ist. Eine Ausführung des bekannten Verfahrens rein durch Software gesteuert ist nicht möglich.

Die aus dem Stand der Technik bekannten Fehlerbehandlungsmechanismen können auf transiente Fehler, die bei der Abarbeitung eines Computerprogramms auf einem Rechengerät auftreten, nicht in geeigneter Weise reagieren.

Transiente Fehler sind aber gerade in künftigen Technologien sehr häufig. Falls man sie entdeckt z.B. über Dual Core Mechanismen, dann bleibt somit immer noch die Frage einer Fehlerlokalisierung zu beantworten, um das korrekte Resultat zu identifizieren. Dies gilt um so mehr, wenn man das Ziel hat, dass ein transienter Fehler nicht immer einen Neustart des Rechners zur Folge hat. Eine Fehlerlokalisierung ist typischerweise wie beschrieben nur über vergleichsweise aufwändige Verfahren zu erreichen.

Der vorliegenden Erfindung liegt die Aufgabe zugrunde, beim Auftreten von transienten Fehlern beim Abrarbeiten eines Computerprogramms in einem Rechnersystem diese derart konstruktiv zu behandeln, dass die volle Funktionsfähigkeit und die Funktionssicherheit des Rechnersystems innerhalb einer möglichst kurzen Fehlertoleranzzeit wieder hergestellt ist.

Zur Lösung dieser Aufgabe wird ausgehend von dem Verfahren der eingangs genannten Art vorgeschlagen, dass bei einer Detektion eines Fehlers mindestens ein Programmobjekt, das bereits einer Abarbeitung zugeführt wurde, in einen definierten Zustand überführt und aus diesem heraus erneut gestartet wird.

Auf Systemebene stellt sich allerdings weiterhin die Frage, wie man ein solches Konzept der Taskwiederholung vernünftig einsetzen kann. Es ist in der Regel nicht der Fall, dass man ein beliebiges fehlerhaftes Task einfach nochmals rechnen kann, da die zusätzlich benötigte Rechenzeit und auch der dafür verwendete Zeitpunkt aus Systemsicht anders verplant sind. Wenn die Auslastung des Prozessors schon nahe 100% ist (und das ist sie in der Regel), dann wird durch eine solche ungeplante Zusatzlast (wie sie eine Taskwiederholung darstellt) eine Überlastung des Systems erzeugt, die typischerweise zu einem Zusammenbruch führen kann. Noch deutlicher wird dies, wenn man zeitgesteuerte Systeme betrachtet (die sich, wie es sich abzeichnet, zumindest teilweise durchsetzen werden). Bei diesen ist eine Deadlineverletzung nicht tolerierbar, ebenso wenig wie bei den meisten anderen harten Echtzeitkonzepten.

Als Konsequenz ergibt sich, dass man also aus Systemsicht die Zusatzlast, die durch eine potenzielle Taskwiederholung entstehen kann, einplanen muss. Wenn man nach jedem Task die Rechenzeit vorhält, die eine Taskwiederholung benötigt, so ist das sicherlich funktionsfähig, allerdings muss man gegenüber einem nicht-fehlerbehandelnden System 100% zusätzliche Performanz bezahlen. Aus Kostensicht ist das nicht akzeptabel.

Es ist daher weiterhin Aufgabe der Erfindung eine optimale Systemstrategie anzugeben, die das zweifache Rechnen eines Tasks nicht immer einplant (und damit einen permanenten und sehr großen Overhead erzeugt) und gleichzeitig die Frage löst, wie sich das mit zeitgesteuerten Ansätzen verbinden lässt.

Diese Aufgabe wird durch die Merkmale des Verfahrensanspruchs 1 sowie des Rechengeräts gemäß Anspruch 19 gelöst. Die ahhängigen Ansprüche 2 bis 12, sowie 14 and 15 spezifizieren zweckmäßige Ausgestaltungen des Gegenstandes ihres Hauptanspruchs.

Dokument D1 = XP010707048:
HONG Y S ET AL: "A fault tolerant technique for scheduling periodic tasks in real-time systems" SOFTWARE TECHNOLOGIES FOR FUTURE EMBEDDED AND UBIQUITOUS SYSTEMS, 2004. PROCEEDINGS. SECOND IEEE WORKSHOP ON VIENNA, AUSTRIA 11-12 MAY 2004, PISCATAWAY, NJ, USA,IEEE, 11. Mai 2004 (2004-05-11), Seiten 135-138, ISBN: 0-7695-2123-1
wird als nächstliegender Stand der Technik betrachtet, weil D1 ein Verfahren gemäß des Oberbegriffs des Anspruchs 1 offenbart.

### [Vorteile der Erfindung]

Es wird somit ein Verfahren, eine Betriebssystem und eine Rechengerät im Rahmen einer erfindungsgemäßen Systemstrategie vorgeschlagen, die es erlauben, das Konzept der Taskwiederholung mit minimalem oder sogar ohne Performanzoverhead einzubinden. Eine solche Systemstrategie ist dabei eine Randbedingung für Schedulingverfahren von Tasks, Aufgaben, Programmen oder Programmteilen, welche im Weiteren insbesondere als Programmobjekt oder Programmobjekte bezeichnet werden.

Das Programmobjekt, das erneut gestartet wird, muss bei der Detektion des Fehlers nicht vollständig abgearbeitet worden sein. Im Sinne der Erfindung können auch solche Programmobjekte beim Auftreten eines Fehlers erneut gestartet werden, die zum Zeitpunkt der Fehlerdetektion noch nicht vollständig abgearbeitet worden sind, mit deren Abarbeitung aber wohl schon begonnen wurde. Erfindungsgemäß wird also beim Auftreten eines transienten oder eines permanenten Fehlers mindestens ein Betriebssystemobjekt erneut ausgeführt. Die Vorteile gegenüber dem Micro Roll-Back liegen insbesondere darin, dass die Wiederholung eines Programmobjekts mit einer sehr geringen Hardwareunterstützung realisiert werden kann. Es ist höchstens zusätzlicher Speicherplatz erforderlich, um einige für die erneute Ausführung des Programmobjekts erforderliche Informationen (z.B. Eingangsgrößen des Programmobjekts) abspeichern zu können. Die eigentliche Verwaltung des erfindungsgemäßen Verfahrens kann durch das Betriebssystem des Rechengeräts ausgeführt werden. Das heißt, das erfindungsgemäße Verfahren ist mit herkömmlichen, handelsüblichen Prozessoren realisierbar, ohne dass es zusätzlicher Hardware bedarf. Selbstverständlich ist es aber auch möglich, das erfindungsgemäße Verfahren mit Hardwareunterstützung zu realisieren.

Günstiger ist es somit im Vergleich zum Stand der Technik, das fehlerhafte Task, also die fehlerhafte Aufgabe bzw. das fehlerhafte Programm oder Programmteil bzw. Programmobjekt oder mindestens Betriebssystemobjekt nochmals zu rechnen. Falls der Fehler ursprünglich transient war, sind bei einer Neuberechnung die beiden Outputs gleich, der Fehler ist also verschwunden und durch die Neuberechnung behandelt.

Vorteilhafter Weise wird somit ein Verfahren zum Abarbeiten eines Computerprogramms auf einem Rechengerät, insbesondere auf einem Mikroprozessor dargestellt, wobei das Computerprogramm mehrere Programmobjekte umfasst und bei dem Verfahren während der Abarbeitung des Computerprogramms auf dem Rechengerät Fehler detektiert werden, wobei bei einer Detektion eines Fehlers mindestens ein Programmobjekt, das bereits einer Abarbeitung zugeführt wurde, in einen definierten Zustand überführt und aus diesem heraus erneut gestartet wird, und nachfolgende weitere Programmobjekte verschoben werden.

Zweckmäßiger Weise werden die Programmobjekte in wenigstens zwei Klassen unterteilt, wobei bei einer Detektion eines Fehlers Programmobjekte der ersten Klasse wiederholt werden und bei einer Detektion eines Fehlers in einem Programmobjekt der ersten Klasse, das bereits einer Abarbeitung zugeführt wurde, dieses Programmobjekt der ersten Klasse anstelle eines Programmobjektes der zweiten Klasse erneut gestartet wird. Dabei wird die Detektion eines Fehler nur in Klassen durchgeführt, die erneut gestartet werden.

Zweckmäßiger Weise ist für alle Programmobjekte eine Gesamtrechenzeit in einem Durchlauf vorgesehen und die Gesamtrechenzeit wird derart aufgeteilt, dass die Programmobjekte welche bei Detektion eines Fehlers erneut gestartet werden im fehlerfreien Fall höchstens 50% der Gesamtrechenzeit in einem Durchlauf erhalten, wobei die Programmobjekte der unterschiedlichen Klassen abwechselnd abgearbeitet werden und das fehlerhafte Programmobjekt der ersten Klasse anstelle des direkt nachfolgenden Programmobjektes der zweiten Klasse abgearbeitet bzw. erneut gestartet wird.

Die Fehlerdetektion selbst kann nach einem beliebigen Verfahren erfolgen. Denkbar ist der Einsatz jeder Art von Fehlerentdeckungsmechanismus, der Fehler während der Abarbeitung des Computerprogramms (sog. concurrent checking) detektieren kann. Beispielsweise bei einer Dual Core Architektur ist der ganze Rechnerkem zweifach ausgebildet. Wenn die Rechnerkerne in einem Lockstep-Modus betrieben werden, kann für jede Instruktion verglichen werden, ob beide Rechnerkerne die gleichen Ergebnisse liefern. Ein Unterschied der Ergebnisse lässt dann mit Sicherheit auf einen Fehler schließen. Dieser Fehlerentdeckungsmechanismus entdeckt also Fehler bei der Abarbeitung der Programmobjekte in Echtzeit. Entsprechendes gilt auch für fehlerentdeckende Codes, die in der Prozessorarchitektur durchgängig verwendet werden, oder auch für duplizierte Teilkomponenten des Rechengeräts. All diesen Fehlerentdeckungsmechanismen ist gemeinsam, dass sie transiente Fehler sehr schnell entdecken und ein Fehlersignal liefern, wenn ein Fehler detektiert wurde.

Auf ein solches Fehlersignal hin kann ein Fehlerbehandlungsmechanismus angestoßen werden, der das Programmobjekt wiederholt. Falls bei der erneuten Ausführung der gleiche Fehler nochmals auftritt, kann auf einen permanenten Fehler geschlossen werden, oder ein Fehlerzähler erhöht werden, wobei erst bei dessen Überschreiten eines bestimmten Wertes auf einen permanenten Fehler geschlossen wird. Wenn der Fehler dagegen bei der erneuten Ausführung des Programmobjekts nicht mehr auftritt, kann davon ausgegangen werden, dass der Fehler ein transienter Fehler war. Noch während der fehlerfreien erneuten Ausführung des Programmobjekts steht das Computerprogramm wieder für seine bestimmungsgemäße Funktion bereit. Die Verfügbarkeit ist also bereits nach kürzester Zeit wieder hergestellt. Eine Wiederholung mindestens eines Programmobjekts ist somit ein gutes Mittel, transiente Fehler zu behandeln.

Gemäß einer vorteilhaften Weiterbildung der Erfindung wird vorgeschlagen, dass die Programmobjekte als Laufzeitobjekte des Computerprogramms ausgebildet sind (im Folgenden speziell Tasks genannt) und bei der Detektion eines Fehlers mindestens eine Task erneut ausgeführt wird. Bei einer Task handelt es sich um ein typisches Objekt insbesondere auf Betriebssystemebene. Die Wiederholung einer Task kann mit minimalem Aufwand, falls gewünscht sogar rein softwaremäßig gesteuert, realisiert werden.

Gemäß einer bevorzugten Ausführungsform der Erfindung wird vorgeschlagen, dass ein zum Zeitpunkt der Detektion des Fehlers ausgeführtes Programmobjekt erneut gestartet wird. Alternativ oder zusätzlich können aber auch Programmobjekte gestartet und erneut abgearbeitet werden, die zum Zeitpunkt der Detektion des Fehlers bereits vollständig abgearbeitet waren.

Es wird vorgeschlagen, dass während der Abarbeitung der Programmobjekte, insbesondere zu Beginn der Abarbeitung der Programmobjekte, mindestens ein definierter Zustand der Programmobjekte erzeugt und abgespeichert wird. Dies kann bspw. dadurch erfolgen, dass die Werte aller für den Zustand des Programmobjekts relevanten Größen abgespeichert werden.

Des weiteren wird vorgeschlagen, dass zur Fehlerdetektion ein zu dem Rechengerät, auf dem das Computerprogramm mit den mehreren Programmobjekten abgearbeitet wird, redundant arbeitendes weiteres Rechengerät verwendet wird. Selbstverständlich kann auch mehr als ein redundantes Rechengerät zur Fehlerdetektion eingesetzt werden.

Vorteilhafterweise wird das erfindungsgemäße Verfahren in einem Kraftfahrzeug, insbesondere in einem Kraftfahrzeugsteuergerät, verwendet, um trotz unvermeidbarer transienter Fehler beim Abarbeiten eines Computerprogamms eine sichere und zuverlässige Abarbeitung des Computerprogramms zu gewährleisten. Das ist vor allem für die Abarbeitung von Steuer-und/oder Regelungsprogrammen in sicherheitskritischen Anwendungen in einem Kraftfahrzeug von Bedeutung.

Es wird ferner vorgeschlagen, dass auf einen permanenten Fehler geschlossen wird, falls der gleiche Fehler bei der erneuten Ausführung des mindestens einen Programmobjekts erneut auftritt. Es ist auch denkbar, dass erst dann auf einen permanenten Fehler geschlossen wird, wenn der Fehler nach einer vorgebbaren Anzahl an Wiederholungen des Programmobjekts noch immer auftritt. In diesem Fall wird also selbst dann noch auf einen transienten Fehler geschlossen, wenn dieser erst nach einer dritten oder einer noch späteren Wiederholung des Programmobjekts wegfällt. Durch diese Weiterbildung der Erfindung können wichtige Programmobjekte bspw. 3-mal statt nur 2-mal wiederholt werden.

Gemäß einer anderen vorteilhaften Weiterbildung der Erfindung wird vorgeschlagen, dass die Anzahl der Wiederholungen des mindestens einen Programmobjekts auf einen vorgebbaren Wert begrenzt wird. Dadurch wird verhindert, dass bei einem permanenten Fehler das gleiche Programmobjekt beliebig oft wiederholt wird. Die Beschränkung der Anzahl der Wiederholungen des mindestens einen Programmobjekts kann bspw. mittels eines Zählers oder über Zeitschranken erfolgen. Durch die Vorgabe des taskabhängigen Wiederholwerts wird außerdem ermöglicht, wichtige Tasks öfter zu wiederholen als weniger wichtige, und somit wichtigen Tasks öfter bzw. länger die Möglichkeit zu geben, ohne transiente Fehler fehlerfrei abzulaufen, während bei weniger wichtigen Tasks relativ schnell auf einen permanenten Fehler geschlossen und eine andere Systemreaktion eingeleitet wird.

Gemäß einer weiteren bevorzugten Ausführungsform der Erfindung wird vorgeschlagen, dass die Anzahl der Wiederholungen des mindestens einen Programmobjekts auf einen vorgebbaren Wert dynamisch begrenzt wird. Vorteilhafterweise wird die Anzahl der Wiederholungen des mindestens einen Programmobjekts in Abhängigkeit von einer verbleibenden Restzeit für ein Scheduling auf einen vorgebbaren Wert dynamisch begrenzt. Auf diese Weise können bspw. eine erste Task und eine zweite Task durchlaufen, während eine dritte Task mehrmals wiederholt werden kann.

Zur Realisierung des erfindungsgemäßen Verfahrens wird vorgeschlagen, dass während der Abarbeitung des Computerprogramms vor der Ausführung eines Programmobjekts die Werte der zur Ausführung des Programmobjekts notwendigen bzw. den Zustand des Programmobjekts definierenden Größen gespeichert werden. Gemäß dieser Ausführungsform werden also die Größen aller Programmobjekte abgespeichert.

Alternativ wird vorgeschlagen, dass bei einem in einer Periode periodisch abzuarbeitenden Computerprogramm bei einer Detektion eines Fehlers auf ein bestimmtes Programmobjekt an einem vorgebbaren Rücksprungpunkt in der Periode des Computerprogramms zurückgesprungen wird. Gemäß dieser Ausführungsform wird also bei einem Fehler stets an die gleiche Stelle innerhalb der Periode gesprungen. Vorzugsweise werden dann während der Abarbeitung des Computerprogramms nur vor der Ausführung eines Programmobjekts an dem Rücksprungpunkt die Werte von allen für den Zustand des Programmobjekts relevanten Größen gespeichert. Es müssen also nur einmal pro Zyklus oder Periode nur die Werte der relevanten Größen des Programmobjekts an dem Rücksprungpunkt abgespeichert werden. Dadurch kann Zeit für die Speicherung und Speicherplatz eingespart werden.

Bei einer erneuten Ausführung eines Programmobjekts nach der Detektion eines Fehlers werden dann die abgespeicherten Eingangsgrößen aufgerufen und dem erneut auszuführenden Progammobjekt als Eingangsgrößen zur Verfügung gestellt.

Als eine weitere Ausführungsform der Erfindung wird vorgeschlagen, dass zu einem Programmobjekt mehrere Rücksprungpunkte angelegt werden. Beim Auftreten eines Fehlers muss nicht das gesamte Programmobjekt, sondern nur ein Teil des Programmobjekts erneut abgearbeitet werden. Beim Auftreten eines Fehlers wird einfach auf denjenigen vorangegangenen Rücksprungpunkt gesprungen, bis zu dem die Abarbeitung des Programmobjekts fehlerfrei war. Zum Beispiel kann bei einem fehlerfreien Abarbeiten des Programmobjekts bis zum n-ten Rücksprungpunkt beim Auftreten eines Fehlers zwischen diesem und dem (n+1)-ten Rücksprungpunkt auf den n-ten Rücksprungpunkt zurückgesprungen werden. Das Programmobjekt wird dann ab dem n-ten Rücksprungpunkt erneut abgearbeitet. Damit ist eine Zeitersparnis möglich. Vorzugsweise wird beim Überschreiten eines jeden Rücksprungpunktes während der Abarbeitung des Programmobjekts jeweils mindestens ein definierter Zustand erzeugt und abgespeichert.

Von besonderer Bedeutung ist die Realisierung des erfindungsgemäßen Verfahrens in der Form eines Betriebssystems. Dabei ist das Betriebssystem auf einem Rechengerät, insbesondere auf einem Mikroprozessor, ablauffähig und zur Ausführung des erfindungsgemäßen Verfahrens programmiert, wenn es auf dem Rechengerät abläuft. In diesem Fall wird also die Erfindung durch das Betriebssystem realisiert, so dass dieses Betriebssystem in gleicher Weise die Erfindung darstellt wie das Verfahren, zu dessen Ausführung das Betriebssystem geeignet ist. Das Betriebssystem ist vorzugsweise auf einem Speicherelement abgespeichert und wird zur Abarbeitung an das Rechengerät übermittelt. Als Speicherelement kann insbesondere ein beliebiger Datenträger oder ein elektrisches Speichermedium zur Anwendung kommen, beispielsweise ein Random-Access-Memory (RAM), ein Read-Only-Memory (ROM) oder ein Flash-Memory.

Als eine weitere Lösung der Aufgabe der vorliegenden Erfindung wird ausgehend von dem Rechengerät der eingangs genannten Art vorgeschlagen, dass das Rechengerät einen Fehlerbehandlungsmechanismus aufweist, der bei einer Detektion eines Fehlers durch den Fehlerentdeckungsmechanismus ein erneutes Ausführen mindestens eines Programmobjekts veranlasst.

Gemäß einer vorteilhaften Weiterbildung der Erfindung wird vorgeschlagen, dass der Fehlerbehandlungsmechanismus eine Triggerlogik aufweist, welche bei einer Detektion eines Fehlers das mindestens eine Programmobjekt neu startet.

Gemäß einer bevorzugten Ausführungsform wird vorgeschlagen, dass auf dem Rechengerät ein Echtzeit-Betriebssystem, bspw. OSEK time, abläuft. Schließlich wird vorgeschlagen, dass das Rechengerät einen Mikroprozessor umfasst.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung, beziehungsweise in der Zeichnung. Es zeigen:
Figur 1 Ein Ablaufdiagamm eines erfindungsgemäßen Verfahrens gemäß seiner bevorzugten Ausführungsform; und
Figur 2 ein erfindungsgemäßes Rechengerät gemäß seiner bevorzugten Ausführungsform in einer schematischen Darstellung, und
Figur 3 bestehend aus den Figuren 3a und 3b einen ersten erfindungsgemäßen Ansatz zur Einbindung der Taskwiederholung, und
Figur 4 bestehend aus den Figuren 4a und 4b einen zweiten erfindungsgemäßen Ansatz zur Einbindung der Taskwiederholung, und
Figur 5 bestehend aus den Figuren 5a und 5b einen dritten erfindungsgemäßen Ansatz zur Einbindung der Taskwiederholung.

### Beschreibung der Ausführungsbeispiele

Die vorliegende Erfindung betrifft ein Verfahren zum Abarbeiten eines Computerprogamms auf einem Rechengerät, insbesondere auf einem Mikroprozessor. Das Computerprogramm umfasst mehrere Programmobjekte, die vorzugsweise als Tasks ausgebildet sind. Bei dem Verfahren werden während der Abarbeitung des Computerprogramms auf dem Rechengerät Fehler detektiert. Die detektierten Fehler können transienter (also vorübergehender) oder permanenter Art sein.

Die transienten Fehler können bei der Abarbeitung eines Computerprogramms auf einem Rechengerät auftreten. Da die Strukturen auf den Halbleiterbausteinen (sogenannten Chips) der Rechengeräte immer kleiner, die Taktrate der Signale aber immer größer und die Spannungen der Signale immer niedriger werden, treten bei der Abarbeitung eines Computerprogramms auf einem Rechengerät immer häufiger transiente Fehler auf. Im Gegensatz zu permanenten Fehlern treten sie nur temporär auf und verschwinden nach einiger Zeit in der Regel von selbst wieder. Bei transienten Fehlern sind lediglich einzelne Bits falsch, ohne dass das Rechengerät an sich permanent beschädigt ist. Transiente Fehler können verschiedene Ursachen haben, wie beispielsweise elektromagnetische Einflüsse, Alpha-Partikel oder Neutronen.

Aufgrund der Tatsache, dass transiente Fehler nahezu unvorhersehbar auftreten und deshalb nicht reproduzierbar sind, erfolgt bei aus dem Stand der Technik bekannten Rechengeräten eine Fehlerbehandlung im wesentlichen nur für permanente Fehler. Eine Berücksichtigung transienter Fehler beschränkt sich auf das Inkrementieren und gegebenenfalls Dekrementieren eines Fehlerzählers. Dieser wird in einem Speicher abgelegt und kann off-line, das heißt beispielsweise während eines Werkstattaufenthalts, als Diagnose- oder Fehlerinformation ausgelesen werden. Erst dann kann auf den Fehler entsprechend reagiert werden. Die bekannte Fehlerbehandlung erlaubt also keine Fehlerbehandlung innerhalb einer insbesondere für sicherheitsrelevante Systeme erforderlichen kurzen Fehlertoleranzzeit und zum anderen auch keine konstruktive Fehlerbehandlung in dem Sinne, dass innerhalb der Fehlertoleranzzeit das Computerprogramm wieder ordnungsgemäß abgearbeitet wird und das Rechengerät seine bestimmungsgemäße Aufgabe erfüllen kann.

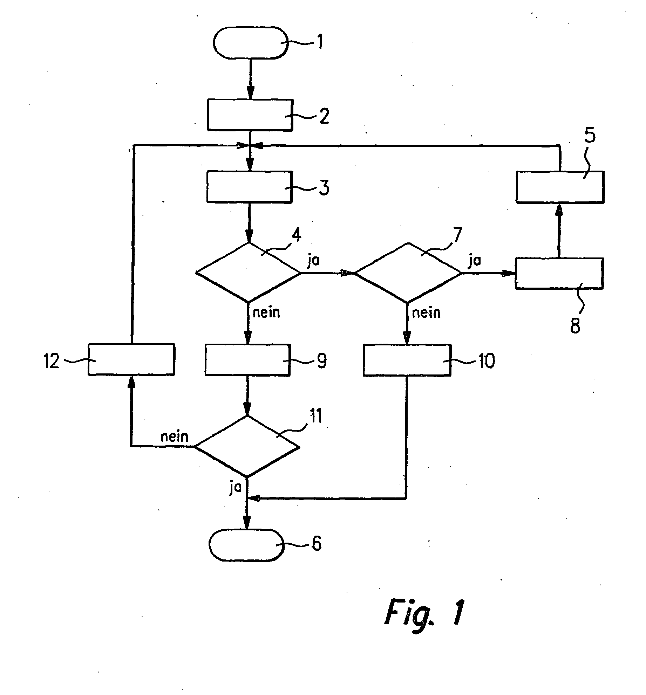

Im Gegensatz dazu erlaubt das erfindungsgemäße Verfahren eine Behandlung eines transienten Fehlers eines auf einem Rechengerät ablaufenden Computerprogramms mit einem systematischen, konstruktiven Umgang mit der transienten Natur der meisten Fehler. Ein Ablaufdiagramm des erfindungsgemäßen Verfahrens am Beispiel eines Laufzeitobjekts, einer sogenannten Task, ist in Fig.1 dargestellt. Die Existenz weiterer Tasks beeinflusst den prinzipiellen Ablauf nicht, eine Berücksichtigung entfällt also. So wie gemäß dem in Fig. 1 dargestellten Ablauf eine Task behandelt wird, können erfindungsgemäß also auch mehrere Tasks behandelt werden. Besonders vorteilhaft ist ein parallel arbeitender Fehlerentdeckungsmechanismus (sog. concurrent checking). Dieser ist in einem Ablaufdiagramm so aber nicht darstellbar, er ist an der entsprechenden Stelle als serieller Baustein eingefügt.

Das erfindungsgemäße Verfahren beginnt in einem Funktionsblock 1. In dem Funktionsblock 1 wird mit der Abarbeitung der Task auf dem Rechengerät begonnen; die Task wird aufgerufen. In einem Funktionsblock 2 wird ein Rücksprungpunkt erzeugt. Zu diesem Zweck werden sichere relevante Taskeingangsgrößen, die ausreichen, die Task in eine definierten Zustand für einen Neustart zu versetzen und die Task nochmals zu starten, in einem Speicherelement des Rechengerätes abgespeichert. Vorzugsweise werden alle Eingangsgrößen der Task abgespeichert. In einem Funktionsblock 3 wird dann die Task weiter abgearbeitet. Die Abarbeitung kann entweder zu einem weiteren Rücksprungpunkt oder bis zum Ende der Task erfolgen. Dann wird ein Fehlerentdeckungsmechanismus ausgeführt. Die Fehlerdetektion kann nach einem beliebigen Verfahren erfolgen. Die Fehler werden während der Abarbeitung des Computerprogramms detektiert (sogenanntes concurrent checking). So ist beispielsweise bei einer sogenannten Dual-Core-Architektur der ganze Rechnerkem zweifach ausgebildet. Wenn die Rechnerkeme in einem sogenannten Lockstep-Modus betrieben werden, kann für jede Instruktion verglichen werden, ob beide Rechnerkeme die gleichen Ergebnisse liefern. Ein Unterschied der Ergebnisse lässt dann mit Sicherheit auf einen Fehler schließen. Ein solcher Fehlerentdeckungsmechanismus entdeckt also Fehler bei der Abarbeitung der Task in Echtzeit. Entsprechendes gilt auch für fehlerentdeckende Codes, die in der Prozessorarchitektur durchgängig verwendet werden oder auch für duplizierte Teilkomponenten des Rechengerätes. Vorzugsweise werden solche Fehlerentdeckungsmechanismen eingesetzt, die transiente Fehler sehr schnell entdecken und ein Fehlersignal liefern, wenn ein Fehler detektiert wurde.

In einem Abfrageblock 4 wird überprüft, ob ein Fehler, also ein transienter oder ein permanenter Fehler, entdeckt wurde. Falls ein Fehler entdeckt wurde, wird in einen weiteren Abfrageblock 7 verzweigt, wo der aktuelle Wert einer Fehlerzählerlogik überprüft wird. Falls der Fehlerzähler einen vorgebbaren Zählerstand noch nicht unterschritten (bei einem dekrementierenden Fehlerzähler) oder überschritten (bei einem inkrementierenden Fehlerzähler) hat, kann die Task, während deren Abarbeitung der Fehler aufgetreten ist, bzw. können eine bestimmte Anzahl an Tasks, die vor dem Auftreten des Fehlers abgearbeitet wurden, noch einmal ausgeführt werden. Falls ein erneutes Starten der Abarbeitung der Task möglich ist, wird in einem Funktionsblock 8 verzweigt, in dem der Status der Fehlerzählerlogik mit der Information, dass ein weiterer Fehler aufgetreten ist, aktualisiert (dekrementiert oder inkrementiert) wird. Von dort wird in einen Funktionsblock 5 verzweigt, in welchem die in dem Funktionsblock 2 abgespeicherten Größen geladen und der Task zum Erzeugen eines definierten Zustandes zu Beginn der Abarbeitung zugeführt werden. Dann wird zu dem Funktionsblock 3 verzweigt, wo die zu wiederholende Task teilweise, das heißt beispielsweise von einem bereits abgearbeiteten Rücksprungpunkt aus, oder aber als ganzes, das heißt die Task wird von Beginn an noch einmal gestartet, noch einmal abgearbeitet wird.

Falls sich in dem Abfrageblock 4 ergibt, dass während der Abarbeitung der Task in dem Funktionsblock 3 kein Fehler aufgetreten ist, wird in einem Funktionsblock 9 verzweigt, in welchem der Status der Fehlerzählerlogik mit der Information aktualisiert wird, dass kein Fehler detektiert worden ist. Von dort aus wird in einen Abfrageblock 11 verzweigt, wo überprüft wird, ob das Computerprogramm zu Ende abgearbeitet ist. Falls dem so ist, wird zum Ende des Computerprogramms in Funktionsblock 6 verzweigt. Anderenfalls wird in einen Funktionsblock 12 verzweigt, wo entsprechend dem aktuellen Taskstatus ein weiterer Rücksprungpunkt erzeugt wird, indem sichere relevante Taskeingangsgrößen, die ausreichen, um die Task nochmals zu starten, definiert und abgespeichert werden. Von dort aus wird dann wieder zu dem Funktionsblock 3 verzweigt, wo die zu wiederholende Task erneut gestartet und entweder teilweise oder als ganzes noch einmal abgearbeitet wird.

Falls sich in dem Abfrageblock 7 ergibt, dass aufgrund des Standes der Fehlerzählerlogik ein weiterer Versuch zur erneuten Abarbeitung der Task nicht mehr möglich ist, wird in einen Funktionsblock 10 verzweigt. In dem Abfrageblock 7 wird überprüft, ob der Wert der Fehlerzählerlogik für diese Task größer als ein taskabhängiger Wiederholwert ist. Dieser taskabhängige Wiederholwert kann entweder für verschiedene Tasks gleich oder aber individuell für jede Task einzeln vorgegeben werden. Auf diese Weise ist es möglich, dass beispielsweise besonders wichtige Tasks zunächst mehrmals wiederholt werden, bevor ein permanenter Fehler gemeldet wird. Wenn der taskabhängige Wiederholwert als 1 vorgegeben wird, wird die Task nur einmal wiederholt, bevor ein permanenter Fehler detektiert wird. Falls der taskabhängige Wiederholwert auf 2 oder 3 vorgegeben wird, wird die Task 2 oder 3-mal wiederholt, bevor ein permanenter Fehler detektiert wird. Die Task hat in diesem Fall also eine längere Zeit, beziehungsweise mehr Durchläufe zur Verfügung, bis der transiente Fehler nicht mehr auftritt. In dem Funktionsblock 10 wird ein permanenter Fehler detektiert und eine entsprechende Maßnahme eingeleitet. Diese Maßnahme kann beispielsweise darin bestehen, das Computerprogramm in einen Notlaufbetrieb zu überführen oder zunächst nichts zu unternehmen und den Ablauf des Computerprogramms dann zu beenden.

Das erfindungsgemäße Verfahren muss nicht notwendiger Weise alle in Fig. 1 dargestellten und oben erläuterten Funktions- und Abfrageblöcke umfassen. So kann bspw. auf die Blöcke 7 bis 9 verzichtet werden, welche die Fehlerzählerlogik betreffen. Bei der Detektion eines Fehlers würde(n) die erneut zu startende(n) und auszuführende(n) Task(s) so lange wiederholt werden, bis der Fehler nicht mehr auftritt. Ein permanenter Fehler würde nicht detektiert werden, so dass auch Funktionsblock 10 wegfallen könnte. Alternativ kann der taskabhängige Wiederholwert als 1 vorgegeben werden, so dass die Funktionsblöcke 8 und 9 zum Aktualisieren des Fehlerzählers entfallen könnten. Schließlich wäre es auch möglich, auf die Blöcke 11 und 12 zu verzichten, wenn nur eine einzige Task mit einem einzigen Rücksprungpunkt ausgeführt wird.

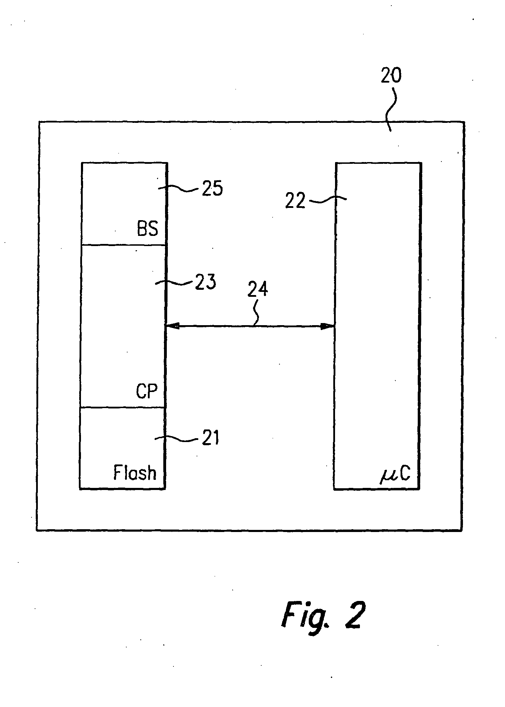

In Fig. 2 ist ein erfindungsgemäßes Rechengerät zum Abarbeiten eines Computerprogramms gemäß seiner bevorzugten Ausführungsform dargestellt. Das Rechengerät ist in seiner Gesamtheit mit dem Bezugszeichen 20 bezeichnet. Das Rechengerät umfasst ein Speicherelement 21, das beispielsweise als ein elektronischer Speicher, insbesondere als ein Flash-Memory, ausgebildet ist. Außerdem umfasst das Rechengerät 20 einen Mikroprozessor 22, auf dem ein Computerprogramm abgearbeitet werden kann. Das Computerprogramm ist auf dem elektronischen Speichermedium 21 abgespeichert und mit dem Bezugszeichen 23 bezeichnet. Zur Abarbeitung des Computerprogramms auf dem Mikroprozessor 22 wird das Computerprogramm entweder als Ganzes oder abschnittsweise, beispielsweise befehlsweise, über eine Datenverbindung 24 an den Mikroprozessor 22 übertragen. Die Datenverbindung 24 kann als eine oder mehrere Datenleitungen oder als ein Bus-System zur Datenübertragung ausgebildet sein. Auf dem Speichermedium 21 ist außerdem ein Betriebssystem abgespeichert, dass beim Hochfahren des Rechengerätes 20 zumindest teilweise aus dem Speicher 21 an den Mikroprozessor 22 übertragen und dort ausgeführt wird. Das Betriebssystem ist mit dem Bezugszeichen 25 bezeichnet. Es hat die Aufgabe, die Abarbeitung des Computerprogramms 23 auf den Mikroprozessor 22 und an das Rechengerät 20 angeschlossene Peripheriegeräte zu steuern und zu verwalten. Gemäß der vorliegenden Erfindung ist das Betriebssystem 25 in besonderer Weise ausgebildet, so dass es zur Ausführung des erfindungsgemäßen Verfahrens programmiert ist und das erfindungsgemäße Verfahren ausführt, wenn es auf dem Mikroprozessor 22 abläuft. Insbesondere umfasst das Betriebssystem 25 einen Zugang zu einem Fehlerentdeckungsmechanismus zur Detektion eines Fehlers während der Abarbeitung des Computerprogramms 23 auf dem Mikroprozessor 22. Außerdem umfasst das Betriebssystem 25 einen Fehlerbehandlungsmechanismus, der bei einer Detektion eines Fehlers ein erneutes Ausführen mindestens eines Programmobjektes (einer Task) des Computerprogramms 23 veranlasst.

Es wird somit ein Verfahren, eine Betriebssystem und eine Rechengerät im Rahmen einer erfindungsgemäßen Systemstrategie vorgeschlagen, die es erlauben, dieses Konzept der Taskwiederholung mit minimalem oder sogar ohne Performanzoverhead einzubinden.

Es wird dabei eine Systemstrategie zugrunde gelegt, die bei jeweils unterschiedlichen Voraussetzungen den Performanzoverhead und damit die Kosten minimiert. Generell wird dabei vorausgesetzt, dass ein insbesondere bereits beschriebener Fehlerentdeckungsmechanismus zur Verfügung steht, der Fehler beim Ablauf eines Tasks entdecken kann (z.B. ein Dual Core Mechanismus, mit redundanter Verarbeitung). Weiter wird hier speziell auf transiente Fehler eingegangen. Um permanente Fehler abzudecken, ist eine Erweiterung notwendig z.B. ein Fehlerzähler wie bereits erwähnt.

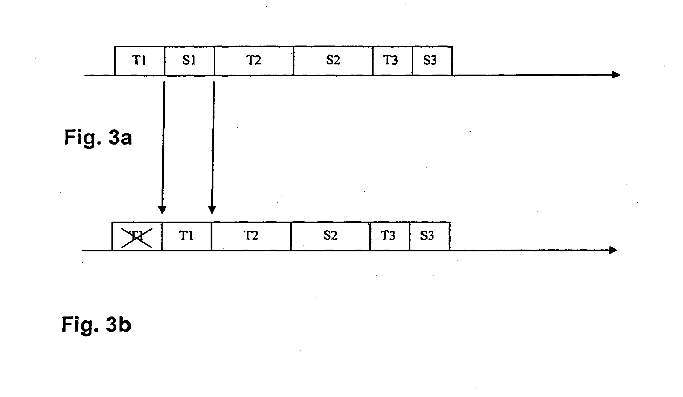

Bei der erfindungsgemäßen Strategie zur Einbindung der Taskwiederholung, wie diese in Figur 3 beschrieben wird, sind einige Voraussetzungen zu beachten:
Es werden mindestens zwei Klassen von Tasks (z.B. kritsche und unkritische Tasks) unterschieden. Dabei werden bereits die Fehlerentdeckungsmechanismen nicht für alle Klassen von Tasks eingesetzt und/oder die Taskwiederholung wird nicht für alle Klassen von Tasks durchgeführt.

Im Beispiel von Figur 3 werden zwei Klassen von Tasks unterschieden, bei denen nur bei einer Klasse eine Taskwiederholung durchgeführt wird und/oder nur bei einer Klasse ein Fehlerentdeckungsmechanismus gestartet wird. Bei einer Unterscheidung in kritische und unkritische Tasks, werden eben nur Fehler in den kritischen Tasks erfindungsgemäß abgefangen, insbesondere wird nur für die erste Klasse der Fehlerentdeckungsmechanismus eingesetzt. Kritische Tasks sind dabei solche bei denen eine korrekte Abarbeitung für die Gesamtfunktion oder grundlegende Funktionalität des Systems erforderlich ist und spätestens zu einem bestimmten Zeitpunkt erfolgt sein muss um diese Funktion zu erhalten. Unkritische Tasks sind solche bei denen die Gesamtsystemfunktion oder auch die grundlegende Funktion entweder nicht betroffen oder nicht wesentlich eingeschränkt wird. Insbesondere wird bei einem System dabei zwischen sicherheitskritischen und sicherheitsunkritischen Funktionen unterschieden.

Transiente Fehler in einem Task der zweiten, also hier unkritischen Klasse 2 können ignoriert werden. Weiter gilt wie ausgeführt, dass ein Task der zweiten Klasse auch mal nicht "drankommen darf", d.h. dass es aus Systemsicht keine gravierenden Folgen hat, wenn ein Task dieser zweiten Klasse in einer Taskverarbeitungsrunde nicht aufgerufen wird. Darüber hinaus sollte die gesamte Laufzeit von Tasks der ersten, kritischen Klasse 1 vorzugsweise nicht mehr als einen bestimmten systembedingten Prozentsatz (z.B. 50%) der Gesamtrechenzeit eines Durchlaufs bzw. einer Taskverarbeitungrunde beanspruchen. Dabei sind den kritischen Tasks bei einer Zweiteilung in kritische und unkritische insgesamt höchstens 50% der Gesamtrechenzeit zugewiesen, so dass im worst case wenn alle kritischen Tasks fehlerhaft sind diese erneut gestartet bzw. gerechnet werden können.

Dann ist ein Systemansatz gemäß Figur 3 möglich, bei dem sich Tasks der verschiedenen Klassen abwechseln so, dass der "Nachfolger" S1 (Klasse 2) eines Tasks T1 (Klasse 1) im Zeitplan mindestens ebensoviel Zeit erhält, wie die WCET (worst case execution time) von T1.

Grundidee ist dann, dass bei Auftreten eines transienten Fehlers in T1 an Stelle von S1 nochmals T1 gerechnet wird. Damit ist sichergestellt, dass der Fehler in T1 vor der Berechnung von T2 behoben ist. Fehlererkennung und -behandlung (einschließlich einer sehr wahrscheinlichen Heilung unter Beibehaltung der Fehlertoleranzeigenschaften) finden damit innerhalb der Rechenzeit eines Tasks statt.

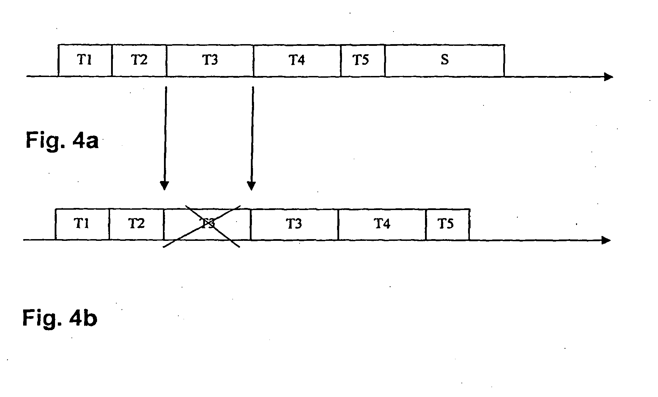

In Figur 3 wird dazu zwischen Klasse 1 Tasks T1, T2 und T3 und Klasse 2 Tasks S1, S2 und S3 unterschieden. Bei Fehlerfreier Ausführung ist in Figur 3a die Taskabfolge T1, S1, T2, S2, T3, S3 beispielhaft dargestellt. Bei Auftreten eines Transienten Fehlers während T1 wird gemäß Figur 3b T1 in der S1 Zeit nochmals gerechnet und anschließen T2, S2, T3, S3, so dass der tarnsiente Fehler korrigiert wird.
Ein weiterer Systemansatz zur Einbindung der Taskwiederholung ist in Figur 4, bestehend aus den Figuren 4a und 4b dargestellt. Dabei sollte das System mit kleineren Jittern (in der Größenordnung einer Taskrechenzeit) zurecht kommen. Dies sollte sich vorzugsweise durch Anwendung und Plattformmechanismen (vor allem wohl Betriebssystem) hindurchziehen. In Figur 4a ist dabei ein Durchlauf mit den Tasks T1, T2, T3, T4, T5 und S bei fehlerfreie Ausführung dargestellt.

Wieder muss es mindestens zwei Klassen von Tasks (z.B. wie vorher kritsche und unkritische) geben bei denen hier im Beispiel nur bei einer Klasse eine Taskwiederholung durchgeführt wird und/oder nur bei einer Klasse ein Fehlerentdeckungsmechanismus gestartet wird. Bei einer Unterscheidung in kritische und unkritische Tasks, werden eben nur Fehler in den kritischen Tasks erfindungsgemäß abgefangen, insbesondere wird nur für die erste Klasse der Fehlerentdeckungsmechanismus eingesetzt. Dies gilt wie bei Figur 3.

So können auch hier transiente Fehler in einem Task der zweiten Klasse ignoriert werden. Weiter gilt auch hier, dass ein Task der zweiten Klasse auch mal nicht "drankommen darf", d.h. dass es aus Systemsicht keine gravierenden Folgen hat, wenn ein Task dieser Klasse in einer Runde nicht aufgerufen wird. Schließlich muss es mindestens ein unkritisches Task pro Durchlauf oder Zyklus, also Taskrechenrunde geben, das so lange dauert wie das längste der kritischen Tasks. Diese wenigstens eine unkritische Task kann auch als idle Zeit realisiert werden, was natürlich auch für das Beispiel nach Figur 3 gilt.

Im Beispiel wird nun angenommen, dass es gibt in einem Durchlauf oder Zyklus die Tasks Ti von T1,..bis .,Tn (mit n als natürlicher Zahl, hier 5) gibt, die alle kritisch sind und die im wesentlichen in dieser Reihenfolge abgearbeitet werden sollen. Weiter gibt es noch mindestens ein Task S nach Tn, das unkritisch und länger als jedes einzelne Ti ist. In Figur 4b ist nun in Task T3 ein transienter Fehler aufgetreten. Bei Detektion eines Fehlers in Ti wird das Task Ti einfach sofort wiederholt und der Rest, also T4 und T5 nach hinten geschoben, entsprechend Figur 4b. So lange nur ein transienter Fehler im Durchlauf auftritt fällt keines der kritischen Tasks unter den Tisch und keines wird in der Ausführung um mehr als die maximale Tasklänge nach hinten geschoben. Ob dabei bei mehreren Fehlern kritische Tasks nicht ausgeführt werden hängt somit direkt von der Länge der unkritischen Task bzw. der idle Zeit S ab. Aus Sicherheitsgründen kann auch hier die gesamte Laufzeit von Tasks der ersten, kritischen Klasse 1 so gewählt werden, dass diese vorzugsweise nicht mehr als einen bestimmten systembedingten Prozentsatz (z.B. 50%) der Gesamtrechenzeit eines Durchlaufs bzw. einer Taskverarbeitungrunde beanspruchen. Dabei sind den kritischen Tasks bei einer Zweiteilung in kritische und unkritische auch hier aus sicherheitsaspekten insgesamt höchstens 50% der Gesamtrechenzeit zugewiesen, so dass im worst case wenn alle kritischen Tasks fehlerhaft sind diese erneut gestartet bzw. gerechnet werden können.

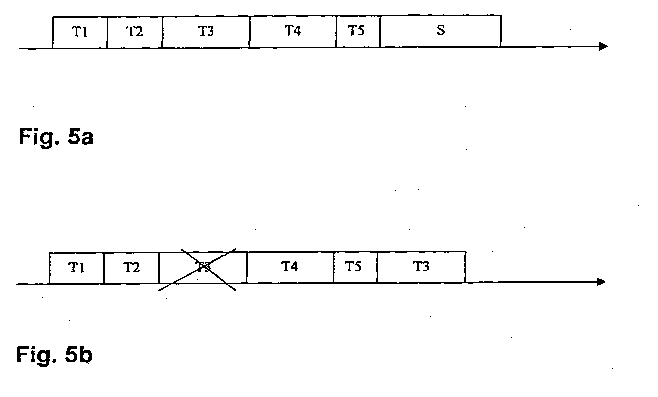

Figur 5 bestehend aus Figur 5a und 5b zeigt einen weiteren Ansatz, bei welchem im wesentlichen übereinstimmende Voraussetzungen gelten. Hier kommt das System mit etwas größeren Jittern (in der Größenordnung eines Durchlaufs) zurecht. Dies muss sich durch Anwendung und Plattformmechanismen, insbesondere das Betriebssystem hindurchziehen. Wieder gibt es mindestens zwei Klassen von Tasks (z.B. kritsche T1-T5 und unkritische S). Auch hier wird nur für die erste Klasse (T1-T5) der Fehlerentdeckungsmechanismus eingesetzt. Transiente Fehler in einem Task der zweiten Klasse können auch hier ignoriert werden. Weiter muss gelten, dass ein Task der zweiten Klasse auch mal nicht "drankommen darf", d.h. dass es aus Systemsicht keine gravierenden Folgen hat, wenn ein Task dieser Klasse in einer Runde nicht aufgerufen wird. Schließlich muss es mindestens ein unkritisches Task pro Durchlauf oder Zyklus geben, das so lange dauert wie das längste der kritischen Tasks (kann auch hier als idle time realisiert werden). (Überlegungen wie oben bei Figur 3 und 4).

Angenommen, es gibt in einem Durchlauf die Tasks T1,...,Tn (alle kritisch), die in diesem Durchlauf abgearbeitet werden sollen. Weiter gebe es noch mindestens ein Task S nach Tn, das unkritisch und länger als jedes einzelne Ti ist. In Figur 5a ist dazu der Ablauf ohne fehlerhafte Task dargestellt mit der Reihenfolge T1, T2, T3, T4, T5 und S für einen Durchlauf.

Bei Detektion eines Fehlers in Ti, wie z.B. entsprechend Figur 5b in T3, wird nun das Ergebnis von Ti (T3) als irrelevant erklärt und im Gegensatz zu den vorherigen Beispielen werden die anderen Tasks (T4, T5) abgearbeitet. Nach dem Tn (T5) erledigt ist, wird Ti (T3) nochmals gerechnet. Voraussetzung ist dabei ein Systemdesign, das es nicht fordert, dass die Ergebnisse von Tasks einer Runde von anderen Tasks der selben Runde noch (zwingend) benötigt werden, da hierbei die Reihenfolge der Tasks nicht eingehalten wird.

Diese Systemansätze werden entsprechend der Ausführungen zu den Figuren 1 und 2 mit der entsprechenden Vorrichtung ausgeführt, so dass bezüglich der Offenbarung ausdrücklich jede Ausführungsform mit jeder anderen erfindungsgemäß kombinierbar ist.

Dadurch ist erfindungsgemäß eine optimale FO-Figenschaft (FO: Fail Operation(al), Fault Operation(al)) bzgl. transienter Fehler, sogar mit einer sehr kurzen Heilungszeit, die die FO-Eigenschaft selbst wieder heilt erzielbar. Dieser Ansatz ist auch sehr gut in zeitgesteuerten Systemen einsetzbar und dahingehend optimierbar.

## Patentansprüche

1. Verfahren zum Abarbeiten eines Computerprogramms (23) auf einem Rechengerät (20), insbesondere auf einem Mikroprozessor (22), wobei das Computerprogramm (23) mehrere Programmobjekte umfasst und bei dem Verfahren während der Abarbeitung des Computerprogramms (23) auf dem Rechengerät (20) Fehler detektiert werden, **dadurch gekennzeichnet, dass** die Programmobjekte in wenigstens zwei Klassen unterteilt werden, wobei bei einer Detektion eines Fehlers Programmobjekte einer ersten Klasse wiederholt, werden und dass bei einer Detektion eines Fehlers in einem Programmobjekt der ersten Klasse, das bereits einer Abarbeitung zugeführt wurde, dieses Programmobjekt in einen definierten Zustand überführt und aus diesem heraus erneut gestartet wird und nachfolgende weitere Programmobjekte der ersten Klasse verschoben werden und dass für Programmobjekte einer zweiten Klasse keine Wiederholung durchgeführt wird.

2. Verfahren nach Anspruch 1, **dadurch gekennzeichnet, dass** die Detektion eines Fehlers nur in Klassen durchgeführt wird, die erneut gestartet werden.

3. Verfahren nach Anspruch 1, **dadurch gekennzeichnet, dass** für alle Programmobjekte eine Gesamtrechenzeit in einem Durchlauf vorgesehen ist und die Gesamtrechenzeit derart aufgeteilt wird, dass die Programmobjekte der ersten Klasse welche bei Detektion eines Fehlers erneut gestartet werden im fehlerfreien Fall höchstens 50% der Gesamtrechenzeit in einem Durchlauf erhalten.

4. Verfahren nach Anspruch 1, **dadurch gekennzeichnet, dass** die Programmobjekte der unterschiedlichen Klassen abwechselnd abgearbeitet werden.

5. Verfahren nach Anspruch 1, **dadurch gekennzeichnet, dass** das fehlerhafte Programmobjekt der ersten Klasse anstelle des direkt nachfolgenden Programmobjektes der zweiten Klasse abgearbeitet wird.

6. Verfahren nach Anspruch 1, **dadurch gekennzeichnet, dass** die Programmobjekte als Tasks des Computerprogramms (23)ausgebildet sind und bei der Detektion eines Fehlers mindestens eine Task erneut ausgeführt wird.

7. Verfahren nach Anspruch 1 oder 6, **dadurch gekennzeichnet, dass** ein zum Zeitpunkt der Detektion des Fehlers ausgeführtes Programmobjekt erneut ausgeführt wird.

8. Verfahren nach Anspruch 1, **dadurch gekennzeichnet, dass** während der Abarbeitung der Programmobjekte, insbesondere zu Beginn der Abarbeitung der Programmobjekte, mindestens ein definierter Zustand der Programmobjekte erzeugt und abgespeichert wird.

9. Verfahren nach Anspruch 1, **dadurch gekennzeichnet, dass** das Verfahren in einem Kraftfahrzeug, insbesondere in einem Kraftfahrzeugsteuergerät, verwendet wird.

10. Verfahren nach Anspruch 1, **dadurch gekennzeichnet, dass** während der Abarbeitung des Computerprogramms (23) vor der Ausführung eines Programmobjekts die Werte von zur Abarbeitung des Programmobjekts notwendigen Größen gespeichert werden (3).

11. Verfahren nach Anspruch 1, **dadurch gekennzeichnet, dass** bei einem in einer Periode periodisch abzuarbeitenden Computerprogramm (23) bei einer Detektion eines Fehlers auf ein bestimmtes Programmobjekt an einem vorgebbaren Rücksprungpunkt in der Periode des Computerprogramms (23) zurückgesprungen wird.

12. Betriebssystem (25), das auf einem Rechengerät (20), insbesondere auf einem Mikroprozessor (22), ablauffähig ist, **dadurch gekennzeichnet, dass** das Betriebssystem (25) zur Ausführung eines Verfahrens nach einem der Ansprüche 1 bis 12 programmiert ist und das erfindungsgemäße Verfahren ausführt, wenn es auf dem Rechengerät (20) abläuft.

13. Rechengerät (20) zum Abarbeiten eines Computerprogramms (23), das mehrere Programmobjekte umfasst, wobei das Rechengerät (20) einen Fehlerentdeckungsmechanismus zur Detektion eines Fehlers während der Abarbeitung des Computerprogramms (23) auf dem Rechengerät (20) aufweist, **dadurch gekennzeichnet, dass** die Programmobjekte in wenigstens zwei Klassen unterteilt sind, dass das Rechengerät (20) einen Fehlerbehandlungsmechanismus aufweist der bei einer Detektion eines Fehlers in einem Programmobjekt einer ersten Klasse das bereits einer Abarbeitung zugeführt wurde, das Programmobjekt der ersten Klasse in einen definierten Zustand überführt und aus diesem heraus erneut startet, und nachfolgende weitere Programmobjekte der ersten Klasse verschiebt und dass für Programmobjekte einer zweiten Klasse keine Wiederholung durchgeführt wird.

14. Rechengerät (20) nach Anspruch 13, **dadurch gekennzeichnet, dass** der Fehlerbehandlungsmechanismus eine Triggerlogik aufweist, welche bei einer Detektion eines Fehlers das mindestens eine Programmobjekt der ersten Klasse neu startet.

15. Rechengerät (20) nach Anspruch 13, **dadurch gekennzeichnet, dass** auf dem Rechengerät (20) ein Echtzeit-Betriebssystem (25) abläuft.

## Claims

1. Method for executing a computer program (23) on a computing unit (20), in particular on a microprocessor (22), the computer program (23) comprising a plurality of program objects and errors being detected in the method during execution of the computer program (23) on the computing unit (20), **characterized in that** the program objects are divided into at least two classes, program objects in a first class being repeated if an error is detected, and **in that**, if an error is detected in a program object in the first class, which has already been supplied for execution, this program object is changed to a defined state and is restarted from said state, and subsequent further program objects in the first class are shifted, and **in that** program objects in a second class are not repeated.

2. Method according to Claim 1, **characterized in that** an error is detected only in classes which are restarted.

3. Method according to Claim 1, **characterized in that** a total computing time is provided in a run for all program objects and the total computing time is divided in such a manner that the program objects in the first class, which are restarted if an error is detected, are received for at most 50% of the total computing time in a run when there are no errors.

4. Method according to Claim 1, **characterized in that** the program objects in the different classes are executed alternately.

5. Method according to Claim 1, **characterized in that** the faulty program object in the first class is executed instead of the directly following program object in the second class.

6. Method according to Claim 1, **characterized in that** the program objects are in the form of tasks of the computer program (23) and at least one task is carried out again if an error is detected.

7. Method according to Claim 1 or 6, **characterized in that** a program object which is being executed when the error is detected is executed again.

8. Method according to Claim 1, **characterized in that** at least one defined state of the program objects is generated and stored during execution of the program objects, in particular at the beginning of execution of the program objects.

9. Method according to Claim 1, **characterized in that** the method is used in a motor vehicle, in particular in a motor vehicle control unit.

10. Method according to Claim 1, **characterized in that** the values of variables needed to execute a program object are stored (3) during execution of the computer program (23) before execution of the program object.

11. Method according to Claim 1, **characterized in that,** in the case of a computer program (23) which is to be periodically executed in a period, the method returns to a particular program object at a predefinable return point in the period of the computer program (23) if an error is detected.

12. Operating system (25) which can run on a computing unit (20), in particular on a microprocessor (22), **characterized in that** the operating system (25) is programmed to carry out a method according to one of Claims 1 to 12 and carries out the method according to the invention if it runs on the computing unit (20).

13. Computing unit (20) for executing a computer program (23) comprising a plurality of program objects, the computing unit (20) having an error detection mechanism for detecting an error during execution of the computer program (23) on the computing unit (20), **characterized in that** the program objects are divided into at least two classes, **in that** the computing unit (20) has an error handling mechanism which, if an error is detected in a program object in a first class, which has already been supplied for execution, changes the program object in the first class to a defined state, restarts it from said state and shifts subsequent further program objects in the first class, and **in that** program objects in a second class are not repeated.

14. Computing unit (20) according to Claim 13, **characterized in that** the error handling mechanism has a trigger logic unit which restarts the at least one program object in the first class if an error is detected.

15. Computing unit (20) according to Claim 13, **characterized in that** a real-time operating system (25) runs on the computing unit (20).

## Revendications

1. Procédé de traitement d'un programme d'ordinateur (23) sur un appareil de calcul (20) notamment sur un microprocesseur (22) selon lequel le programme d'ordinateur (23) comporte plusieurs objets programme et au cours du traitement du programme d'ordinateur (23) sur l'appareil de calcul (20), on détecte les erreurs,
**caractérisé en ce qu'**
on subdivise les objets programme en au moins deux classes,
lors d'une détection d'une erreur, on répète les objets programme d'une première classe,
en cas de détection d'une erreur dans un objet programme de la première classe qui a déjà conduit au traitement, on fait passer cet objet programme dans un état défini à partir duquel on redémarre de nouveau,
on décale les autres objets programme de la première classe, et
on n'effectue pas de répétition pour les objets programme d'une seconde classe.

2. Procédé selon la revendication 1,
**caractérisé en ce qu'**
on effectue la détection d'un défaut seulement dans les classes qui ont été démarrées de nouveau.

3. Procédé selon la revendication 1,
**caractérisé en ce que**
pour tous les objets programme, on prévoit une durée de calcul totale pour un passage et on répartit la durée de calcul totale de façon que les objets programme de la première classe qui sont redémarrés lors de la détection d'une erreur bénéficient s'il n'y a pas d'erreur, d'au moins 50 % du temps de calcul total dans un passage.

4. Procédé selon la revendication 1,
**caractérisé en ce que**
les objets programme des différentes classes sont traités alternativement.

5. Procédé selon la revendication 1,
**caractérisé en ce que**
les objets programme entachés d'une erreur de la première classe sont traités à la place des objets programme directement suivants de la seconde classe.

6. Procédé selon la revendication 1,
**caractérisé en ce que**
les objets programme sont réalisés sous la forme de tâches du programme d'ordinateur (23) et lors de la détection d'une erreur, on effectue de nouveau au moins une tâche.

7. Procédé selon la revendication 1 ou 6,
**caractérisé en ce qu'**
on renouvelle l'exécution d'un objet programme qui était en cours d'exécution à l'instant de la détection de l'erreur.

8. Procédé selon la revendication 1,
**caractérisé en ce que**
pendant le traitement des objets programme, notamment au début du traitement des objets programmes, on génère et on enregistre en mémoire au moins un état défini des objets programmes.

9. Procédé selon la revendication 1,
**caractérisé en ce qu'**
on utilise le procédé dans un véhicule automobile notamment dans un appareil de commande de véhicule automobile.

10. Procédé selon la revendication 1,
**caractérisé en ce que**
pendant le traitement du programme d'ordinateur (23), avant l'exécution d'un objet programme, on mémorise (3) les valeurs des grandeurs nécessaires au traitement de l'objet programme.

11. Procédé selon la revendication 1,
**caractérisé en ce que**
dans le cas d'un programme d'ordinateur (23) traité périodiquement dans une période, lors d'une détection d'erreur on revient à un certain objet programme à un point de retour prédéfini dans la période du programme d'ordinateur (23).

12. Système d'exploitation (25) exécuté sur un appareil de calcul (20) notamment sur un microprocesseur (22),
**caractérisé en ce que**
le système d'exploitation (25) est programmé pour exécuter un procédé selon l'une des revendications 1 à 12 et il exécute le procédé selon l'invention lorsque le programme se déroule sur un appareil de calcul (20).

13. Appareil de calcul ou calculateur (20) pour traiter un programme d'ordinateur (23) comprenant plusieurs objets programmes, l'appareil de calcul (20) ayant un mécanisme de détection de défaut pour détecter un défaut pendant le traitement du programme d'ordinateur (23) sur l'appareil de calcul (20),
**caractérisé en ce qu'**
on subdivise les objets programme en au moins deux classes,
l'appareil de calcul (20) comporte un mécanisme de traitement d'erreur qui, lors de la détection d'une erreur dans un objet programme d'une première classe déjà fournie pour être traitée, passe l'objet programme de la première classe dans un état défini et à partir de celui-ci, on redémarre et les autres objets programmes, suivants de la première classe sont décalés et on ne répète pas les objets programme d'une seconde classe.

14. Appareil de calcul (20) selon la revendication 13,
**caractérisé en ce que**
le mécanisme de traitement d'erreur comporte une logique de déclenchement qui, lors de la détection d'une erreur, redémarre au moins un objet programme de la première classe.

15. Appareil de calcul (20) selon la revendication 13,
**caractérisé en ce qu'**
un système d'exploitation en temps réel (25) s'exécute sur l'appareil de calcul (20).
